Europäisches Patentamt

(19) European Patent Office

Office européen des brevets

(11) Publication number: **0 278 928 B1**

# EUROPEAN PATENT SPECIFICATION

(45) Date of publication of patent specification :
**18.12.91 Bulletin 91/51**

(51) Int. Cl.⁵ : **B60T 13/66**

(21) Application number: **88830051.4**

(22) Date of filing : **12.02.88**

(54) **System for controlling the automatic brakes of a railway vehicle, by means of electrical signal transmission.**

(30) Priority : **13.02.87 IT 6709787**

(43) Date of publication of application :
**17.08.88 Bulletin 88/33**

(45) Publication of the grant of the patent :
**18.12.91 Bulletin 91/51**

(84) Designated Contracting States :
**AT BE CH DE ES FR GB GR IT LI LU NL SE**

(56) References cited :
EP-A- 0 088 242
DE-A- 2 840 262
IT-A- 67 282
US-A- 3 901 558
US-A- 4 598 953

(73) Proprietor : **WABCO WESTINGHOUSE COMPAGNIA FRENI S.p.A.**
**Via Volvera 51**
**I-10045 PIOSSASCO (Torino) (IT)**

(72) Inventor : **Restori, Ettore**
**Piazza Ruggero Bonghi, 18**
**I-10147 Torino (IT)**
Inventor : **Bortot, Renato**
**Via S. Paolo, 28**
**I-10138 Torino (IT)**
Inventor : **Casadei, Renato**
**Via Roma, 68**
**I-10010 Candia Canavese (Torino) (IT)**
Inventor : **Sisto, Ugo WABCO WESTINGHOUSE COMPAGNIA FRENI SpA**
**Via Pier Carlo Boggio, 20**
**I-10138 Torino (IT)**

(74) Representative : **Buzzi, Franco et al**
**c/o Jacobacci-Casetta & Perani S.p.A. Via Alfieri, 17**
**I-10121 Torino (IT)**

## Description

The subject of the present invention is a system for controlling the automatic brake of a railway vehicle, particularly a locomotive, including a main pneumatic line for supplying compressed air from a source, a general pneumatic line connected to a distributor, and a self-regulating device including a series of actuators for controlling the supply and discharge of the general line through a control lever arranged to assume a series of different positions which correspond to the different functions of the device and each of which has a corresponding electrical reference signal.

More particularly, the invention relates to a control system of the type defined in the main claim of Italian patent application No. 67282-A/85 in the name of the same Applicant. This system comprises, in brief, a circuit having the first inlet connected to the main line and a second inlet connected to the general line, and incorporates :

— a relay valve which controls communication between the two inlets and whose operating chamber is connected to the main line through a solenoid supply valve,

— a first pressure transducer associated with the relay valve,

— a first solenoid discharge valve for reducing the pressure in the general line through the relay valve,

— a second solenoid discharge valve which controls communication between the operating chamber of the relay valve and a discharge,

— a normally-open, on-off solenoid valve which controls communication between the main line and the relay valve,

— a second pressure transducer sensitive to the pressure drop in the general line,

— and an electronic control unit to which are sent the electrical reference signals corresponding to the different positions of the control lever, as well as electrical signals provided by the first and second pressure transducers for comparison with these electrical reference signals.

This control unit is connected to the solenoid valves and is arranged to carry out, in the manner made clear in the above-mentioned Italian Application No. 67282-A/85, the functions of supply and discharge, of boosting and of discharging overloads in the general line, of small-magnitude brake releases, and of discrimination between the initial loading conditions, of leakages in the general line, and of operation of the alarm signal when the control lever is in the positions corresponding to the functions of running and overloading and of braking.

The present invention constitutes an improvement of the system according to the application 67282-A/85 and, in particular, has the object of increasing the operating capacity, while improving the operational efficiency.

According to the invention, this object is achieved by virtue of the fact that the second pressure transducer is connected directly to the general line, and that it further includes luminous indicator means operatively connected to the electronic control unit of the device and arranged to be activated thereby to provide an indication when the transducer detects pressure drops in the general pneumatic line which do not correspond to that required in the positions of the control lever relating either to the functions of running and overload and of braking, or to the function of brake release, as well as that of isolation for checking of any leakages in the general line.

By virtue of this concept, an appreciable extension of the operating capacity of the system is obtained, together with more complete control of the operation of the braking circuit. On the one hand, this is made possible by virtue of the manner of the connection between the second transducer and the general line, which is direct according to the invention but was effected near the relay valve in the version according to application 67282-A/85, with consequent delays and the impossibility, in practice, of detecting leakage in the general line during brake release. On the other hand, the presence of luminous indicator means enables indications relating to any leakages in the general line to be provided clearly and immediately.

According to another aspect of the invention, the electronic control unit is arranged, when the control lever is placed in the brake-release position, to send to the operating chamber of the relay valve by means of the solenoid supply valve an overpressure proportional to the pressure difference established by the lever between the pressure in the operating chamber and the pressure in the general line, the electronic unit being arranged to limit the maximum value of the overpressure and to reduce its magnitude progressively and automatically until the forces acting on the diaphragms of the relay valve are in equilibrium ; the differential established is such as to ensure the maximum supply to the general pneumatic line without causing simultaneous boosting relative to the value established by the control lever.

In the case of railway vehicles provided with electropneumatic braking circuits including electropneumatic valve units these may, to advantage, be controlled directly by the electronic control unit by means of the electrical signals sent thereto by the first pressure transducer.

The invention will now be described with reference to the appended drawing, provided purely by way of non-limiting example, which shows a diagram of the system for controlling the automatic brake of a railway vehicle according to the invention.

This diagram shows, in effect, a part of an automatic brake control system installed in a locomotive provided with two identical driving cabs.

The system comprises essentially a main line P for supplying compressed air and connected to a braking pipe, a general line G connected to a distributor of known type and not illustrated, and a self-regulating device including a ducted plate R which also functions as a support and is provided with connectors for the connection of the lines and two control units $C_1$, $C_2$ situated in the driving cabs of the vehicle.

The ducted plate R has a first inlet connected to the main line P through a normally-open isolation valve 1, and is connected at 2 to the general line G through the two control units $C_1$, $C_2$.

Communication between the valve 1 and the inlet 2 is controlled through a relay valve 8 whose operating chamber is connected to the main line P through a line in which a solenoid supply valve 3 is inserted.

The operating chamber of the relay valve 8 is also connected to a solenoid discharge valve 4 and to a solenoid discharge valve 5 through an isolating valve unit 15. The unit 15 is normally arranged in such a position as to keep communication open between the relay valve 8 and the solenoid valve 5.

Communication between the inlet of the relay valve 8 and the main line P is controlled by means of an on-off solenoid valve 7 which is illustrated in the de-energised condition in the diagram, as are the solenoid valves 3, 4 and 5.

The inlet of the relay valve 8 is also connected to the main line P through a by-pass circuit 21 of reduced section arranged in parallel with the solenoid on-off valve 7.

Two transducers are indicated 9 and 10, of which the first, in accordance with one aspect of the invention, is connected directly to the general line G and the other is connected to the operating chamber of the relay valve 8. The two transducers 9 and 10 are arranged to send electrical signals indicative of the pressures detected to an electronic control unit 11 which controls the solenoid valves 3 and 4 in response to control signals from the two units $C_1$ and $C_2$ and the solenoid valve 7 in response to the signals from the transducer 9.

Each of the control units $C_1$, $C_2$ includes a control lever arranged to assume a series of different positions which correspond to the different functions of the system, which will be described below, and each of which has a corresponding electrical reference signal generated, for example, by a potentiometer, not illustrated, associated with the lever. This signal is sent to the electronic control unit 11.

The control units $C_1$, $C_2$ further include two mechanically operated valves 16, 17 for cutting off the general line G and have the respective functions of isolation and rapid discharge of this line.

According to another aspect of the invention, a luminous indicator 22 is associated with each control unit $C_1$, $C_2$ and is connected to the electronic control unit 11 for activation thereby in the manner specified below.

The circuit also includes a device, generally indicated 6, for repetition of the signals in the locomotive, which is integrated in the system and comprises a double-solenoid valve 18 with bistable control connected on one side to the operating chamber of the relay valve and on the other side to a discharge solenoid valve 19 and a pressure switch 20 whose function is to switch the bistable solenoid valve 18 to connect or disconnect the repetition device.

The valve unit 15 connects the circuit R to two four-way isolating valves 12 (one for each cab) to activate or de-activate respective controls of the direct brake 16 through a direct brake line F.

Finally, two emergency devices are indicated 14, one for each cab, which are normally isolated from the circuit R by the valve unit 15.

The device described above is of the self-regulating type and is provided with control logic based on the comparison carried out by the electronic unit 11 between the reference signals corresponding to the various positions of one or other of the levers 13 and the response signals coming from the pressure transducers 10 and 9.

The electronic unit 11 provides for the control of the operation of the various solenoid valves of the valve whose function is, in practice, that of piloting the high-capacity and highly sensitive relay valve 8 which is required to carry out the supply and discharge of the general line G.

The various functions carried out by the system in correspondence with the various positions assumed by one or other of the control levers 13 are described in detail in the Italian patent application No. 67282-A/85, already cited, which may be referred to for brevity.

Only additional or alternative functions obtained by means of the present invention will be described below.

In particular, the functions of isolation, boosting, running, initial gradual braking, full braking and gradual maximum braking, rapid braking, as well as the particular functions of protection against partial overloads and incorrect operation, automatic closure of the shoes and automaticemergency braking are achieved identically to those described in the aforesaid application No. 67282-A/85.

As far as the function of "gradual brake release" is concerned, which is obtained by moving the control lever 13 from any braking position into the "running" position, as described in application No. 67282-A/85, the reference signal generated by the execution of this movement is compared by the electronic unit 11 with that provided by the transducer 10. The initial disparity causes energisation of the solenoid valve 3 which supplies the operating chamber of the relay 8, causing the general line to be recharged to the value set by means of the control lever 13.

In order to obtain appreciable reductions in the brake-release time, the electronic control unit 11 is arranged in such a way that the chamber of the relay 8 receives, through the solenoid supply valve 3, an overpressure proportional to the difference in pressure established by the control lever 13 between the pressure in the operating chamber 8 and the pressure in the general line G. The electronic unit 11 is arranged to limit the maximum value of this overpressure, as well as automatically to reduce its magnitude progressively as it gradually approaches the preset threshold.

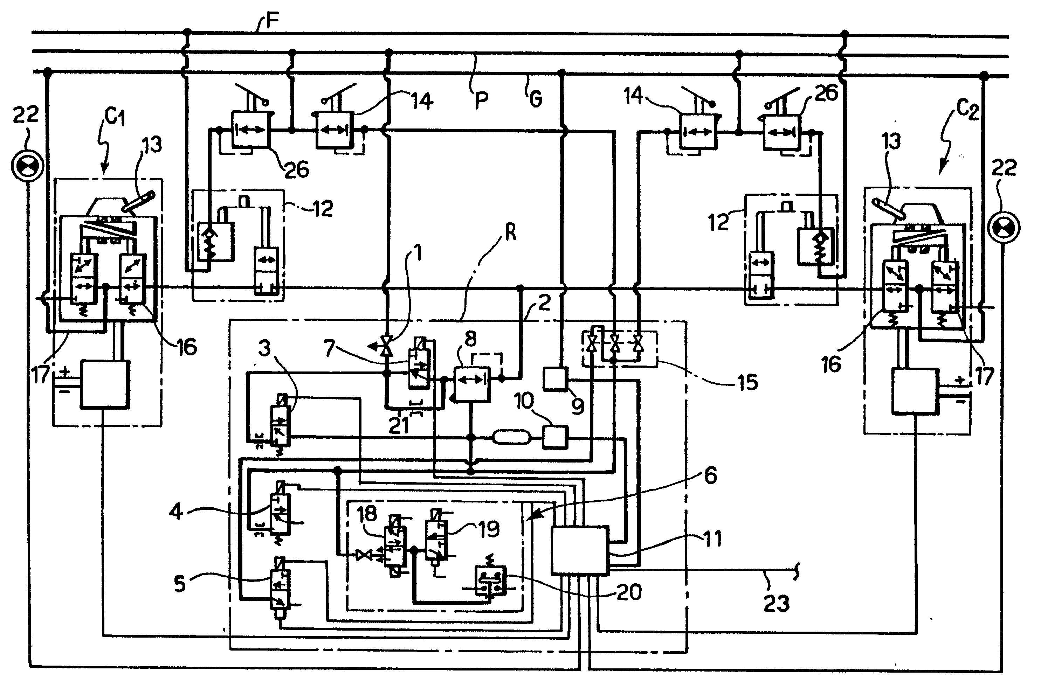

Furthermore, the timing achieved by the electronic unit 11 in the case of large brake releases, by means of the control circuit described with reference to Figure 3 of the application No. 672872-A/85, is arranged to achieve a set time of about 30 seconds in the case of brake releases with a rise in the general line of 3.3 bars to 4.5 bars.

The luminous indicators 22, which remain de-activated during the initial gradual braking stage, are lit during the "initial loading" stage due to the drop in pressure detected by the transducer 9 within the general line G when the main valve of the locomotive is opened. The indicators 22 are subsequently switched off when the differential established between the reference value and that of the pressure in the general line, detected by the transducer 9, is cancelled out.

If the alarm signal is operated in the "running" and "overload" positions, the change in slope of the discharge curve of the general line G, detected by the pressure transducer 9, causes the luminous indicators 22 to be lit.

An identical situation occurs if the alarm signal is operated with the control lever 13 in the braking sector. In fact, in this case, the operation of the alarm signal creates a discrepancy between the value corresponding to the position of the control lever 13 and that detected in the general line by the transducer 9, which causes the electronic unit 11 to activate the indicators 22.

It should be stated that, when the emergency signal is operated during braking since the time described above with reference to gradual braking has elapsed, the electronic control unit 11 causes the luminous indicators 22 to be lit and braking must be carried out by the driver.

The presence of the luminous indicators 22 further enables an indication to be obtained of any leakages in the general line during the checking stages, when trains are being formed, with the control levers 13 in the "isolation" position.

In fact, when both the levers 13 are in the isolation position, the electronic unit 11 memorises the signal provided by the transducer 9, corresponding to the pressure value present in the general line. A simple electronic device, not described but within the capability of an expert in the art, causes this signal to be subtracted according to a predetermined slope. A discrepancy between the signal set and that provided by the transducer 9 causes the luminous indicators 22 to be lit.

This function, which can be adjusted according to the requirements of use, is automatically excluded when one of the control levers 13 is moved from the isolation position.

A further extension of the operating capacity of the present system relative to that described in application No. 67282-A/85 concerns the use of the electronic control unit 11 for controlling the electropneumatic braking circuit of the vehicle. In fact, it is possible to provide for the direct control of the electropneumatic circuit, through one or more electrical lines 23 connectible to the unit 11, by means of the electrical signals supplied to this electronic unit 11 by the first pressure transducer 10. To advantage, this direct control enables the use of additional control members for piloting the supply and discharge of the solenoid valves to be avoided.

## Claims

1. A system for controlling the automatic brake of a railway vehicle by means of electrical signal transmission, of the type including a main pneumatic line for the supply of compressed air from a source, a general pneumatic line connected to a distributor, and a self-regulating device including a series of actuators for controlling the supply and discharge of the general line through a control lever arranged to assume a series of different positions which correspond to the different functions of the device and each of which has a corresponding electrical reference signal, in which the self-regulating device comprises a circuit (R) having a first inlet (1) connected to the main line (P) and a second inlet (2) connected to the general line (G), and incorporates :

— a relay valve (8) which controls communication between the two inlets (1, 2) and whose operating chamber is connected to the main line through a solenoid supply valve (3),

— a first pressure transducer (10) associated with the relay valve (8),

— a first discharge solenoid valve (4) for reducing the pressure in the general line (G) through the relay valve (8),

— a second discharge solenoid valve (5) which controls communication between the operating chamber of the relay valve (8) and a discharge,

— a normally-open, on-off solenoid valve (7) which controls communication between the main line (P) and the relay valve (8),

— a second pressure transducer (9) which is sensitive to the pressure drop in the general line (G),

— an electronic control unit (11) to which are sent the electrical reference signals corresponding to the different positions of the control lever, as well as the electrical signals provided by the first and second pressure transducers for comparison with these electrical reference signals, the control unit (11) being connected to the solenoid valve (3, 4, 5, 7) and being arranged to carry out operations of supply and discharge, of boosting and of discharging overloads in the general line, of small-magnitude brake releases, and of discrimination between the initial loading conditions, of leakages in the general line and of alarms when the control lever is in the positions corresponding to the functions of running and overload, as well as of braking, characterised in that the second pressure transducer (9) of the self-regulating device (R) is directly connected to the general line (G), and in that it further includes luminous indicator means (22) operatively connected to the electronic control unit (11) of the device and arranged to be activated thereby to provide an indication when the transducer (9) detects pressure drops in the general pneumatic line (G) which do not conform to the positions of the control lever (13) corresponding either to the functions of running and overload as well as of braking, or to the brake-release function, or to isolation for checking of any leakages in the general line (G).

2. A system according to Claim 1, characterised in that the electronic control unit (11) is arranged, when the control lever (13) is set in the brake-release position, to send to the operating chamber of the relay valve (8) by means of the solenoid supply valve (3) an overpressure proportional to the pressure difference established by the control lever (13) between the pressure in the operating chamber of the relay valve (8) and the pressure in the general line (G), the electronic unit (11) being arranged to limit the maximum value of the overpressure and automatically to reduce its magnitude progressively to the set value of the pressure difference.

3. A system according to Claim 1 or Claim 2, which can be applied to railway vehicles provided with an electropneumatic braking circuit including electropneumatic valve units, characterised in that the electropneumatic valve means are controlled directly by the electronic control unit (11) by means of the electrical signals sent thereto by the first pressure transducer (10) of the device.

**Patentansprüche**

1. System, um die automatische Bremse eines Eisenbahnwagens mit Hilfe der übertragung eines elektrischen Signals zu steuern, wobei das System eine Hauptdruckluftleitung, um Druckluft von einer Quelle zuzuführen, eine allgemeine Druckluftleitung, die mit einem Verteiler verbunden ist, sowie eine Selbstregeleinrichtung aufweist, die eine Reihe von Stellgliedern enthält, um das Füllen und Entleeren der allgemeinen Leitung über einen Steuerhebel zu steuern, der angeordnet ist, um eine Reihe von unterschiedlichen Stellungen anzunehmen, die den unterschiedlichen Funktionen der Einrichtung entsprechen, wobei jede Fuction ein entsprechendes elektrisches Bezugssignal besitzt, wobei die Selbstregeleinrichtung eine Stufe (R) enthält, die einen ersten Einlaß (1), der mit der Hauptleitung (P) verbunden ist, sowie einen zweiten Einlaß (2) besitzt, der mit der allgemeinen Leitung (G) verbunden ist, wobei das System enthält : ein Überströmventil (8), das die Verbindung zwischen den beiden Einlässen (1, 2) steuert, wobei seine Betriebskammer über ein Einlaß-Magnetventil (3) mit der Hauptleitung verbunden ist, einen ersten Druckwandler (10), der dem Überströmventil (8) zugeordnet ist, ein erstes Ablaß-Magnetventil (4), um den Druck in der allgemeinen Leitung (G) über das Überströmventil (8) herabzusetzen, ein zweites Ablaß-Magnetventil (5), das die Verbindung zwischen der Betriebskammer des Überströmventils (8) und einen Auslaß steuert, ein normalerweise offenes EIN/AUS-Magnetventil (7), das die Verbindung zwischen der Hauptleitung (P) und dem Überströmventil (8) steuert, einen zweiten Druckwandler (9), der auf den Druckabfall in der allgemeinen Leitung (G) anspricht, eine elektronische Steuerstufe (11), an die die elektrischen Bezugssignale, die den unterschiedlichen Stellungen des Steuerhebels entsprechen, sowie die elektrischen Signale angelegt werden, die der erste und zweite Druckwandler liefern, um sie mit diesen elekrtrischen Bezugssignalen zu vergleichen, wobei die Steuerstufe (11) mit dem Magnetventil (3, 4, 5, 7) verbunden und so angeordnet ist, daß folgende Vorgänge ausgeführt werden : Füllen und Entleeren, Druckerhöhen und Ablassen von Überlasten in der allgemeinen Leitung, kleine Bremsfreigaben sowie Unterscheiden zwischen den Anfangs-Lastzuständen, Undichtheiten in der allgemeinen Leitung und Alarmen, wenn der Steuerhebel in jenen Stellungen liegt, die der Funktion des Fahrens und der überlast sowie einer Bremsung entsprechen, dadurch gekennzeichnet, daß der zweite Druckwandler (9) der Selbstregeleinrichtung (R) direkt mit der allgemeinen Leitung (G) verbunden ist, wobei das System weiters eine Leuchtanzeige (22) aufweist, die betriebsmäßig mit der elek- tronischen Steuerstufe (11) der Einrichtung verbunden und so angeordnet ist, daß sie dadurch in Betrieb gesetzt wird, um eine Anzeige zu liefern, wenn der Wandler (9) einen Druckbfall in der allgemeinen Druckluftleitung (G) abtastet, der nicht mit den Stellungen des Steuerhebels (13) übereinstimmt, die enteweder der Funktion des Fahrens und der überlast sowie der Bremsung oder der Bremsen-

Freigabefunktion oder der Abschaltung zum Überprüfen von Undichtheiten in der allgemeinen Leitung (G) entsprechen.

2. System gemäß Anspruch 1, dadurch gekennzeichnet, daß die elektronische Steuerstufe (11) so aufgebaut ist, daß sie dann, wenn sich der Steuerhebel (13) in der Bremsenfreigabe-Stellung befindet, mit Hilfe des Einlaß-Magnetventils (3) zur Betriebskammer des Überströmventils (B) einen Überdruck sendet, der der Druckdifferenz proportional ist, die vom Steuerhebel (13) zwischen dem Druck in der Betriebskammer des Überströmventils (8) und dem Druck in der allgemeinen Leitung (G) errichtet wird, wobei die elektronische Stufe (11) so aufgebaut ist, um den Maximalwert des Überdrucks zu begrenzen und dessen Größe automatisch fortlaufend auf den eingestellten Wert der Druckdifferenz herabzusetzen.

3. System gemäß Anspruch 1 oder 2, wobei das System auf Eisenbahnwagen angewandt werden kann, die mit einem elektropneumatischen Bremskreis ausgestattet sind, der elektropneumatische Ventileinrichtungen besitzt, dadurch gekennzeichnet, daß die elektropneumatische Ventileinrichtung direkt von der elektronischen Steuerstufe (11) mit Hilfe der elektrischen Signale gesteuert wird, die vom ersten Druckwandler (10) der Einrichtung angelegt werden.

**Revendications**

1. Système pour commander le frein automatique d'un véhicule de chemin de fer par la transmission de signaux électriques, le frein étant du type comprenant une conduite pneumatique principale pour l'alimentation en air comprimé à partir d'une source, une conduite pneumatique générale raccordée à un distributeur, ainsi qu'un dispositif auto-régulateur comportant une série d'actionneurs pour commander l'alimentation et la décharge de la conduite générale au moyen d'un levier de commande susceptible de prendre une série de positions différentes qui correspondent aux différentes fonctions du dispositif et à chacune desquelles est coordonné un signal électrique de référence, système dans lequel le dispositif auto-régulateur comprend un circuit (R) possédant une première entrée (1) raccordée à la conduite principale (P) et une seconde entrée (2) raccordée à la conduite générale (G), le circuit (R) contenant :

— une soupape relais (8) qui contrôle la communication entre les deux entrées (1, 2) et dont la chambre de commande est raccordée à la conduite principale à travers une électrovalve d'alimentation (3),
— un premier transducteur de pression (10) coordonné à la soupape relais (8),
— une première électrovalve de détente (4) pour réduire la pression dans la conduite générale (G) à travers la soupape relais (8),

— une seconde électrovalve de détente (5) qui contrôle la communication entre la chambre de commande de la soupape relais (8) et un échappement,
— une électrovalve ouverte-fermée (7), qui est normalement ouverte et qui contrôle la communication entre la conduite principale (P) et la soupape relais (8),
— un second transducteur de pression (9) qui est sensible à la chute de pression dans la conduite générale (G),
— une unité de commande électronique (11) à laquelle sont envoyés les signaux électriques de référence correspondant aux différentes positions du levier de commande, de même que les signaux électriques délivrés par les premier et second transducteurs de pression, en vue de leur comparaison avec ces signaux électriques de référence, l'unité de commande (11) étant connectée aux électrovalves (3, 4, 5, 7) et étant agencée pour exécuter des opérations d'alimentation et de détente, de suralimentation et d'élimination de surcharges dans la conduite générale, de desserrages du frein de faible amplitude et de discrimination entre les conditions de charge initiales, de fuites dans la conduite générale et d'alarmes lorsque le levier de commande occupe les positions correspondant aux fonctions de marche et de surcharge, de même que de freinage, caractérisé en ce que le second transducteur de pression (9) du dispositif auto-régulateur (R) est raccordé directement à la conduite générale (G) et que le système comporte, en outre, un dispositif indicateur lumineux (22) couplé à l'unité de commande électronique (11) du dispositif et agencé pour être actionné par celui-ci afin de fournir une indication lorsque le transducteur (9) détecte des chutes de pression dans la conduite pneumatique générale (G) qui ne concordent pas avec les positions du levier de commande (13), correspondant, soit aux fonctions de marche et de surcharge, ainsi que de freinage, soit à la fonction de desserrage du frein ou d'isolement pour la vérification sur la présence de fuites éventuelles dans la conduite générale (G).

2. Système selon la revendication 1, caractérisé en ce que l'unité de commande électronique (11) est agencée pour, lorsque le levier de commande (13) est placé à la position de desserrage du frein, envoyer à la chambre de commande de la soupape relais (8), au moyen de l'électrovalve d'alimentation (3), une surpression proportionnelle à la différence de pression établie par le levier de commande (13) entre la pression dans la chambre de commande de la soupape relais (8) et la pression dans la conduite générale (G), l'unité électronique (11) étant agencée pour limiter la valeur maximale de la surpression et pour réduire automatiquement et progressivement son amplitude jusqu'à la valeur réglée de la différence de pression.

3. Système selon la revendication 1 ou la revendication 2, applicable à des véhicules de chemin de fer équipés d'un circuit de frein électropneumatique, comportant des unités de valves électropneumatiques, caractérisé en ce que les valves électropneumatiques sont commandées directement par l'unité de commande électronique (11) au moyen des signaux électriques envoyés à cette unité par le premier transducteur de pression (10) du dispositif.

EP 0 278 928 B1